(19)

Europäisches
Patentamt
European
Patent Office
Office européen
des brevets

(11) **EP 2 360 914 A2**

(12) **EUROPEAN PATENT APPLICATION**

(43) Date of publication:
24.08.2011 Bulletin 2011/34

(51) Int Cl.:
**H04N 5/445** (2011.01)

(21) Application number: 11152735.4

(22) Date of filing: 31.01.2011

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **02.02.2010 TR 201000754**

(71) Applicant: **Vestel Elektronik Sanayi ve Ticaret A.S.**
**45030 Manisa (TR)**

(72) Inventors:
• **Yilmaz, Enver Gokhan**
**45030 Manisa (TR)**
• **Sezer, Cem**
**45030 Manisa (TR)**
• **Dikici, Alihan**
**45030 Manisa (TR)**

(74) Representative: **Cayli, Hülya**
**Paragon Consultancy Inc.**
**Koza Sokak No: 63/2**
**GOP**
**06540 Ankara (TR)**

(54) **OSD colour customization method**

(57) Digital broadcasting receiver on screen display (OSD) has importance for user to display graphical and textual information of present channel, which is also called user interface. Thus, usability of user interface should be ensured and user satisfaction for user interface should be met. For this purpose, an OSD colour customization method is described in present invention. Customization is done by RGB levelling or using parametric mathematical transformations. By the help of described method, user can have different colour themes without shape distortion and memory allocation, effectively and quickly.

Figure 1

**EP 2 360 914 A2**

**Description**

**Technical Field**

This invention relates to a method to change the colour representation of the on screen display (OSD) of a digital broadcasting receiver by applying user defined customization.

**Prior Art**

Usage of menus in On Screen Display by changing view of On Screen Display (OSD) of a digital broadcasting receiver is much easier for users. For this purpose to meet the users' satisfaction, two common methods are developed to change the view of OSD comprising menus which are used to set adjustments or view information about the channels.
First method is substituting each colour value with another one. By this method, it is possible to constitute different colour themes from a pattern design by transforming each pre-existing value to another one. However, graphics in OSD view may contain gradual colour pixels. Thus, said approach can cause distortions in colour transitions.
Second method is using new set of graphics and images for each new colour theme. According to this method, different coloured images are defined for different colour themes. This method can be appropriate to satisfy the users' expectations. However, each image for each new colour theme requires additional memory allocation. Thus, this method is not suitable for memory efficiency.
Moreover, directly changing the colour of OSD or applying different colour themes is not sufficient for user. Changing the colours of applied theme can be more satisfactory for user.
According to said approaches, a method for automatically changing on-screen display colour of a digital broadcasting receiver is described in KR20020026111 patent document. In KR20020026111 document, changing OSD colour is done automatically if there is information transmitted with broadcasting. By the way, if there is no information, colour of OSD can be changed by user optionally. Said method comprising the steps of: checking colour selection by a user; checking whether or not information of the present channel program is accumulated as database in the inside memory when the user selects setting functions; showing message if there is no information and determining on-screen display (OSD) colour of a graphic user interface(GUI) according to information if there is information; checking whether or not the determined colour is identical with the presently displayed colour and terminating if the colours are the same and changing the presently displayed colour with the determined colour if the colours are different.
Another document, KR20020029845, describes a method for automatically changing a colour and a shape of an OSD of a digital broadcasting receiver. Said method is provided to change the colour and shape of the OSD displayed on a screen according to a user's taste or mental state. In said method, an OSD change menu is selected in the environment setting menus in an OSD type. Detailed selection menus are displayed for changing the shape and colour of the OSD in the OSD change menu. A colour or shape desired by a user is selected in the detailed selection menus. Then, shape and colour of OSD is changed according to decided selections. The detailed selection menus are configured to allow the user to directly change shape, colour, size etc., or to allow the user to select and change design by turning visually appropriate design of shapes and colours into a database.
Due to said problems present invention provides another approach for changing the view of OSD to satisfy users' expectations.

**Brief Description of the Invention**

Present invention explains method for changing colour representation of the on screen display (OSD) of a digital broadcasting receiver. To change said colour representation, colour determination is done by RGB levelling or parametric mathematical transformations. Then, determined colour information is compared with previous OSD colour. If they are same, determined colour is terminated. If they are different, determined colour is replaced with previous OSD colour information. Moreover, determined colour representation is compared with parent theme and determined colour is quantized. Thus, user is limited during colour determination.

**Object of the Invention**

The object of the present invention is to provide a new OSD colour determination method.
Another object of the present invention is to improve usability of user interfaces.
Another object of the present invention is to present the user interface graphics with different colour themes effectively and quickly.
Another object of the invention is to change OSD colour by arranging RGB values of OSD colour information.

## Brief Description of the Drawings

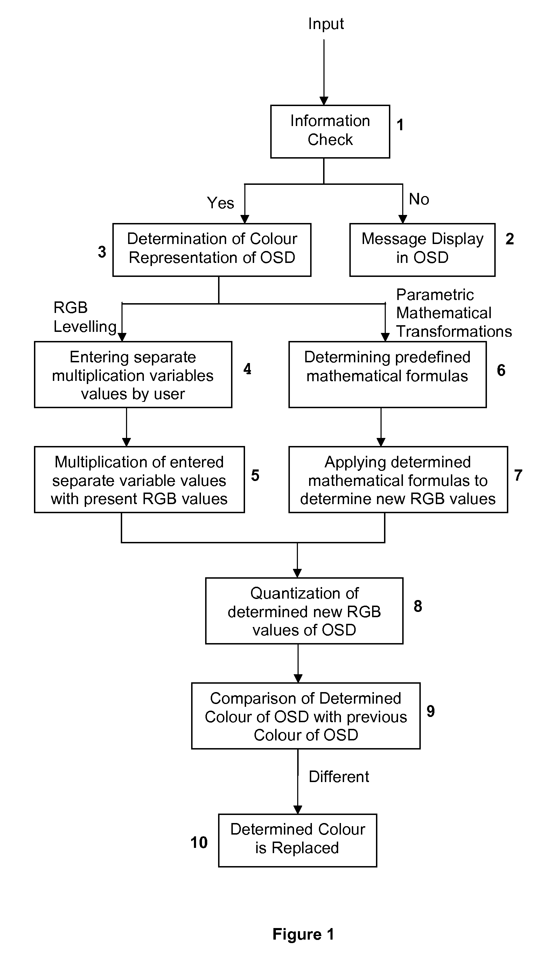

Figure 1: shows the steps of OSD colour changing process.

The reference numbers as used in figure may possess the following meanings.

Information check (1)
No information condition (2)
OSD colour representation determination (3)
RGB levelling application steps (4, 5)
Parametric mathematical transformation application steps (6, 7)
Colour quantisation (8)
Determined colour and previous colour comparison (9)
Same colour condition (10)
Different colour condition (11)

## Detailed Description of the Invention

The general working principle of digital broadcasting receiver OSD is to propose the received information of the program in present channel. This system is called as user interface. By the help of user interface, user can display graphical and textual information of present program. Thus, usability of user interface should be ensured and user satisfaction for user interface should be met. Moreover, presenting the user interface graphics with different colour themes effectively and quickly bears importance. For this purpose, an input device such as keyboard or remote controller should be associated with the receiver. By using said input device, users can manage the system. As represented in Figure 1, when the system receives the input, first the existence of information is checked (1). If there is no information about present program, a message is displayed in OSD (2). If there is information, since that information is displayed by OSD, colour representation of OSD is determined (3). Following the colour determination process, determined colour information is compared with previous colour information (9). If the colours are same, determined colour information is terminated; if they are different, new colour information is replaced with previous information (10). As explained in prior art, there are two common approaches to determine various new colour information.

Since in digital world, determining colour information is based on Red (R), Green (G) and Blue (B) colour information, changing OSD colour by arranging said RGB values is a more effective way. Thus, in present invention user defined customization of colour settings of OSD is done by RGB levelling or by defining a formulation, which is called parametric mathematical transformation, where new OSD colour design on colour space is created.

In RGB levelling application, said RGB values are multiplied by separate variable values (5) which are determined by user (4). Thus, RGB values can be scaled / downscaled separately. Said separate variable values can be independently selected from predefined range. Variable values between 0,5 to 2 are successful variable values. By RGB levelling method, user can customize the parent OSD colour design and create many other custom OSD colour designs. Moreover, by levelling RGB values of parent design, shape distortion is prevented. In other words, having inconsistent colours after the transformation is prevented. With the exclusion of shape distortions, user can have very flexible colour space conversion without any additional memory cost.

Said RGB levelling application can be expressed mathematically as below:

$$Rnew = R^* user\_defined\_R\_constant$$
$$Gnew = G^* user\_defined\_G\_constant$$
$$Bnew = B^* user\_defined\_B\_constant$$

In expressed formula user determines preferable colour settings for OSD. To obtain greenish colour representation, multiplication variable value of G should be greater than the multiplication variable value of R and B, bluish colour representation, multiplication variable value of B should be greater than multiplication variable value of R and G and reddish colour representation, multiplication variable value of R should be greater than multiplication variable value of G and B.

In RGB format, each R, G, B value can take values between 0-255. However, by using RGB levelling, R, G, B values can exceed the said limitation. For instance, multiplication variable value is selected as "2" for R value by user. If the present value of "R" is 150, the new R value, Rnew, will be 300, which exceeds 255. In this condition, Rnew value is saturated to 255 automatically. Thus, error condition is eliminated.

Furthermore, RGB levelling can be applied to different themes. Thus, user can change colour information of the theme which is selected by user. So, user can get different images (different themes) with different colours without requiring additional memory allocation.

Parametric mathematical transformations can be explained as determining new colour values by applying predetermined mathematical methods using present RGB values (7). Thus, new OSD colour design is created on top of the existing parent design. There is no common method for parametric mathematical transformations on colour space. However, to make small adjustments from a parent design, parametric mathematical transformations are suitable. Moreover, some graphics may contain gradual colour pixels. Thus, by using parametric mathematical transformations adjustments from a parent design without distorting colour transitions and additional memory allocation can be done.

Reversing the present RGB colours can be one application of parametric mathematical transformations. In reversion, formulated below, "NewRed" represents the new colour value of R, "NewBlue" represents the new colour value of B and "NewGreen" represents the new colour value of G. Moreover, in below formulated inversion, "Colour.Red", "Colour.Green" and "Colour.Blue" represent present colour values of R, G, and B respectively.

$$NewRed = 255 - Colour.Red$$

$$NewGreen = 255 - Colour.Green$$

$$NewBlue = 255 - Colour.Blue$$

According to expressed formulation, new colour information of OSD in RGB format is;

$$Colour = (NewRed, NewGreen, NewBlue).$$

Another inversion formulation can be expressed mathematically as follows;

$$NewRed = (Colour.Green + Colour.Blue ) / 2$$

$$NewGreen = ((255-Colour.Red) + (255-Colour.Blue) ) / 2$$

$$NewBlue = (Colour.Red + Colour.Green + Colour.Blue) / 3$$

According to expressed formulation, new colour information of OSD in RGB format is;

$$Colour = (NewRed, NewGreen, NewBlue).$$

These expressed formulations can be predetermined by manufacturer and user can select most suitable formulation according to his feel and taste (6). Moreover, user can determine his own formulation to create different coloured patterns which can be a kind of art which transfers a look and feel to another one by establishing relations between RGB values.

Black colour has "0" value for each RGB value. In other words, black is represented as; R=0, G=0 and B=0 in RGB format. Thus, if user wants to change the black colour to another one by using the above explained applications, colour changing process will fail. According to given example about black colour conversion, unless a colour has specific purpose such as always black, the colours which have "0" value will be modified with a predefined value for all applications explained above to take effect.

In the applications described above, user cannot change the colour representation of OSD freely. A limitation for changing the colour representation is predetermined by manufacturer to avoid shape and colour distortions. The number of distinct colours used in determined colour representation of OSD is reduced, so that said determined colour representation should be as visually similar as possible to previous colour representation of said OSD which is called parent colour representation quantisation (8).

**Claims**

1. A method for determining on screen display (OSD) colour of a display device **characterized in that** it comprises the steps of;

   - activating RGB levelling application according to input received by system which comprises said display device,
   - receiving separate multiplication variable values for present RGB values respectively (4),
   - determining new RGB values of OSD according to said received separate multiplication variable values
   - quantizing determined new RGB values of OSD (8)
   - comparing determined and quantized new OSD colour information with previous OSD colour information (9),
   - replacing said new OSD colour information with previous OSD colour information if said new colour information and previous colour information are different (10).

2. A method according to claim 1 wherein, said separate multiplication variable values can be taken from a predefined range between 0,5 and 2.

3. A method according to claim 2 wherein, said variable values are selected by user from said predefined range.

4. A method according to claim 1 wherein, determined new RGB values are saturated to 255 automatically if said determined RGB values exceed limitation.

5. A method according to claim 1 wherein, said RGB levelling can be applied to a theme which is selected by user.

6. A method for determining on screen display (OSD) colour of a display device **characterized in that** it comprises the steps of;

   - activating parametric mathematical transformation application according to input received by system which comprises said display device,
   - determining predefined mathematical formulas which is used for OSD colour determination (6),
   - determining new RGB values of OSD by applying determined mathematical formulas on colour space using present RGB values of said OSD (7),
   - quantizing determined new RGB values of OSD (8)
   - comparing determined and quantized new OSD colour information with previous OSD colour information (9),
   - replacing said new OSD colour information with previous OSD colour information if said new colour information and previous colour information are different (10).

7. A method according to claim 6 wherein, said predetermined formulas can be determined by manufacturer.

8. A method according to claim 7 wherein, said formulas can be determined by user.

9. A method according to claim 1 or 6 wherein, said previous colour information of said OSD which have "0" value are modified with a predetermined value, unless said colours have specific purpose.

Figure 1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 20020026111
- KR 20020029845